# EUROPEAN PATENT SPECIFICATION

(11) **EP 1 416 059 B1**
(45) Date of publication and mention of the grant of the patent: **08.05.2013**
(21) Application number: 03024753.0
(22) Date of filing: 29.10.2003
(51) Int. Cl.: C22C 38/00, C22C 38/04, C22C 38/12, C22C 38/14

(54) **Base material for clad steel plate excellent in low-temperature toughness at weld heat-affected zone and method for producing the clad steel plate**
Grundmaterial für eine plattierte Stahlplatte hervorragend in Tieftemperaturzähigkeit in der wärmebeinflusster Schweisszone und Verfahren zur Herstellung einer plattierten Stahlplatte
Materiau de base pour une plaque d'acier plaqué ayant une bonne résistance mécanique à basse température dans la zone affectée par la chaleur de soudage et méthode de production de plaque en acier

(30) Priority: 29.10.2002 JP 2002313742
(43) Date of publication of application: 06.05.2004
(73) Proprietor: THE JAPAN STEEL WORKS, LTD., Tokyo (JP)
(72) Inventor: Nitta, Yukio, Muroran-shi, Hokkaido (JP); Kayano, Rinzo, Muroran-shi, Hokkaido (JP); Sakuraba, Masahiro, Muroran-shi, Hokkaido (JP); Kondoh, Shigeru, Muroran-shi, Hokkaido (JP)
(74) Representative: Casalonga, Axel

(56) References cited:
- WO-A-01/59167
- US-A- 5 900 075
- PATENT ABSTRACTS OF JAPAN vol. 1996, no. 10, 31 October 1996 (1996-10-31) -& JP 08 158006 A (KOBE STEEL LTD), 18 June 1996 (1996-06-18)
- PATENT ABSTRACTS OF JAPAN vol. 2000, no. 26, 1 July 2002 (2002-07-01) -& JP 2001 254140 A (NIPPON STEEL CORP), 18 September 2001 (2001-09-18)
- PATENT ABSTRACTS OF JAPAN vol. 1996, no. 02, 29 February 1996 (1996-02-29) -& JP 07 278738 A (NIPPON STEEL CORP), 24 October 1995 (1995-10-24)
- PATENT ABSTRACTS OF JAPAN vol. 1999, no. 08, 30 June 1999 (1999-06-30) -& JP 11 061328 A (SUMITOMO METAL IND LTD), 5 March 1999 (1999-03-05)
- PATENT ABSTRACTS OF JAPAN vol. 1997, no. 03, 31 March 1997 (1997-03-31) -& JP 08 311549 A (NIPPON STEEL CORP), 26 November 1996 (1996-11-26)

## Description

### BACKGROUND OF THE INVENTION

### 1. Field of the Invention

The present invention relates to a base material for a clad steel plate used in a natural gas pipeline or the like and produced by quenching and tempering (hereinafter referred to as QT), and a method for producing the clad steel plate.

The present application is based on Japanese Patent Application No. 2002-313742.

### 2. Related Art

The purpose of use of a clad steel plate varies according to a cladding material used in the clad steel plate. The method for producing the clad steel plate also varies according to the cladding material. Heretofore, a material equivalent to APIX65 containing C, Si and Mn as main components, and Nb, V, Ca, Al and Mo as additive components or a minute amount of Ti, B, etc. added as alloy components has been used as a base material for the clad steel plate used in a natural gas pipeline or the like. This steel is produced by predetermined quenching and tempering (QT), controlled rolling by means of a converter , Thermo-mechanical Controlled Process (TMCP), or the like. Furthermore, forproductionofacladsteelpipe, one-pass highly efficient welding is applied to each of front and rear surfaces of the pipe. Generally, in welding for multi-layer cladding, the size of grains in a boundary between the base material and weld metal and in a base material heat-affected zone (hereinafter also referred to as HAZ) are reduced finely by next-pass heat affection. On the other hand, in one-pass welding, grains in the boundary between the base material and the weld metal and in the base material heat-affected zone is made still coarse to thereby bring lowering of toughness. User' s specifications have been however severe recently, so that the risk of brittle fracture in each portion of the pipe exposed to -40°C at the time of emergency shut down of the pipeline has been suggested. Therefore, the requirement that an impact value in the boundary between the base material and the weld metal and in the base material heat-affected zone (HAZ) should be not smaller than 35 (J) at Charpy impact energy at - 40°C (vE -40°C) has been popularized. Furthermore, a drop weight tear test (hereinafter referred to as DWTT) for checking the brittle fracture arrest temperature has been required of the base material. Specifications have become severer so that 100 % tough fracture must be ensured at the test at about -20°C. In the related-art quenched and tempered material, it was however very difficult to meet this requirement. Particularly in one-pass welding, it was the best that an impact value of not smaller than 35 (J) of Charpy impact energy at -20°C (vE -20°C) could be obtained in the boundary between the base material and the weld metal and in the base material heat-affected zone and that 100 % tough fracture could be obtained at the DWTT of the base material at a temperature of about -10°C. In addition, segregation has often occurred in the center portion in plate thickness of the related-art material. This has also caused lowering of the impact value.

Various methods for improving toughness of the HAZ have been heretofore proposed. For example, in the related art, according to JP-B-55-26164 (Patent Document 1), Ti, N, Nb, V and B are added to C, Si, Mn and Al to precipitate minute TiN in steel to thereby reduce the size of austenite grains in the HAZ to improve toughness.

JP-B-55-26164 (claims, etc.) or US 3904447 has also described a method including the steps of: heating the steel at 1250°C to 1400°C; and re-heating the steel under a pressure or at a temperature of not higher than 1150°C.

JP-A-2001-226739 (paragraphs 0011, 0012, etc.) or EP 1 262 571 has described a method for controlling the number of inclusion grains or the like to suppress increase in size of austenite grains exposed to a high temperature for a long time to thereby improve HAZ toughness.

In the method disclosed in JP-B-55-26164, the base material exhibits 20 kg·m Charpy impact energy at 0°C (vE 0°C), the fracture appearance transition temperature (hereinafter referred to as FATT) of the base material is about -50°C, and the HAZ exhibits 20 kg·m of Charpy impact energy at 0°C (vE 0°C) in multi-layer cladding by welding. Almost of TiN is however dissolved as solid solution in a neighborhood of the boundary (hereinafter welded bond portion) between the base material and weldmetal heated to the ultimate temperature higher than 1400°C in the HAZ. Accordingly, there is a problem that the toughness improving effect is reduced in the base material component system.

The method disclosed in JP-A-2001-226739 is multi-layer cladding by welding. In the method, the toughness of the HAZ is 100 to 200 (J) of Charpy impact energy at - 40°C (vE -40°C). It is however difficult to control the minute inclusions in a general steel-making process. This causes increase in cost particularly in melting in an electric furnace.

In the method disclosed in JP-B-55-26164, because the additional step of re-heating the steel to a temperature of not higher than 1150°C is required, there is a problem that the provision of the additional step causes increase in cost. Toughness and weldability of steel plates are examined in US 5.900.075, JP-7-278738 or JP-2001-254140. The same were alos examined in later published documents EP1354973 as EP1375681 referred to high strength plates and piper.

### SUMMARY OF THE INVENTION

The invention is developed upon such circumstances and an object of the invention is to provide a base material for clad steel plate excellent in low-temperature toughness both in the base material requiring low-temperature toughness and in a heat-affected zone due to one-pass welding, and a method for producing the clad steel plate. The base material is preferably selected to be not thicker than 50 mm.

It is necessary to satisfy the requirement that low-temperature toughness in the boundary between the base material and a weld portion, the heat-affected zone and the base material should be ensured by ordinary quenching and tempering after one-pass welding. Therefore, another object of the invention is to provide a clad steel plate which satisfies the following performance by composite addition of alloy elements.

Firstly, while strength is kept the same as in the related art, the grain size is reduced hyperfinely to be in a range of from about 10 to about 12 in terms of mean crystal gain size to improve the low-temperature toughness of the base material. Incidentally, the number of grain size is defined as an index according to JIS G0551 and ISO 643.

Secondly, the grains are restrained from becoming coarse in addition to reduction in grain size in order to improve the low-temperature toughness in the boundary between the base material and the weld portion and in the heat-affected zone of the base material.

Thirdly, production of a martensitic structure in the base material and the heat-affected zone is prevented to select the hardness of the HAZ to be not higher than HV 250. Fourthly, segregation in the center portion in plate thickness of the steel is reduced.

Fifthly, the austenitizing temperature range is widened so that various steel kinds of cladding materials canbe combined for production of various kinds of steel plates.

That is, to solve the problem, the invention provides according to claim 1 a basematerial for clad steel plate excellent in low-temperature toughness at a weld heat-affected zone, containing 0.05 % by mass to 0.10 % by mass of C, 0.10 % by mass to 0.30 % by mass of Si, 1.30 % by mass to 1.60 % by mass of Mn, 0.015 % by mass or less of P, 0.002 % by mass or less of S, 0.10 % by mass to 0.50 % by mass of Ni, 0.05 % by mass or less of Cr, 0.005 % by mass to 0.030 % by mass of Cu, 0.05 % by mass to 0.30 % by mass of Mo, 0.015 % by mass to 0.040 % by mass of V, 0.015 % by mass to 0.040 % by mass of Nb, 0.005 % by mass to 0.020 % by mass of Ti, 0.015 % by mass to 0.050 % by mass of Al, 0.0010 % by mass to 0.0040 % by mass of Ca, 0.0030 % by mass to 0.010 % by mass of N, and the residual part of Fe and unavoidable impurities.

Preferably, in the base material for clad steel plate excellent in low-temperature toughness at a weld heat-affected zone according to the invention, Ti/N which is the ratio of the Ti content to the N content is selected to be in a range of from 1.0 to 3.5.

Preferably, in the base material for clad steel plate excellent in low-temperature toughness at a weld heat-affected zone, the number of grain size after quenching and tempering of the clad steel plate is 10 to 12.

The invention also provides according to claim 4, a method of producing a clad steel plate excellent in low-temperature toughness at a weld heat-affected zone, including the steps of: clad-rolling a clad steel plate base material and a cladding material, the base material containing 0.05 % by mass to 0.10 % by mass of C, 0.10 % by mass to 0.30 % by mass of Si, 1.30 % by mass to 1.60 % by mass of Mn, 0.015 % by mass or less of P, 0.002 % by mass or less of S, 0.10 % by mass to 0.50 % by mass of Ni, 0.05 % by mass or less of Cr, 0.005 % by mass to 0.030 % by mass of Cu, 0.05 % by mass to 0.30 % by mass of Mo, 0.015 % by mass to 0.040 % by mass of V, 0.015 % by mass to 0.040 % by mass of Nb, 0.005 % by mass to 0.020 % by mass of Ti, 0.015 % by mass to 0.050 % by mass of Al, 0.0010 % by mass to 0.0040 % by mass of Ca, 0.0030 % by mass to 0.010 % by mass of N, and the residual part of Fe and unavoidable impurities; performing a solution treatment by heating the resulting plate at 900°C to 1150°C; and tempering the resulting plate at 550°C to 650°C.

Preferably, in the method of producing a clad steel plate excellent in low-temperature toughness at a weld heat-affected zone, Ti/N which is the ratio of the Ti content to the N content is selected to be in a range of from 1.0 to 3.5.

According to the invention, in the base material requiring low-temperature toughness and the heat-affected zone due to one-pass welding, the size of grains in the base material is reduced hyperfinely by addition of proper amounts of Ni, Nb, Al, V, Ti, N, etc. At the same time, increase in grain size in the HAZ is suppressed to obtain excellent high toughness. The limited ranges of components in the invention will be described below in detail.

### C: 0.05 % to 0.10 %

C is a component that is effective in improving the strength of steel. If the C content is lower than 0.05 %, sufficient strength cannot be obtained for general welding. Accordingly, the C content is selected to be not lower than 0.05 %. On the other hand, the upper limit of the C content is set at 0.10 % because excessive addition of C remarkably deteriorates weldability of the steel material, HAZ toughness, etc. Incidentally, for the same reason, it is preferable that the lower limit of the C content is set at 0.05 % and that the upper limit of the C content is set at 0.08 %.

### Si: 0.10 % to 0.30 %

Si is a component necessary for retaining the strength of the base material, deoxidation, etc. To obtain the effect, it is necessary to add at least 0.10 % of Si. The upper limit of the Si content is however set at 0.30 % because excessive addition of Si causes hardening of the HAZ to reduce the toughness of the HAZ. Incidentally, for the same reason, it is preferable that the lower limit of the Si content is set at 0.13 % and that the upper limit of the Si content is set at 0.20 %.

### Mn: 1.30 % to 1.60 %

It is necessary to add 1.30 % or higher of Mn as a component effective in retaining the strength and toughness of the base material. The upper limit of the Mn content is set at 1.60 % in consideration of the toughness and cracking of the weld portion. Incidentally, for the same reason, it is preferable that the lower limit of the Mn content is set at 1.40 % and that the upper limit of the Mn content is set at 1.55 %.

### P: 0.015 % or lower

It is preferable that the P content is as low as possible. Because industrial reduction of the P content causes increase in cost, the upper limit of the P content is set at 0.015 %.

### S: 0.002 % or lower

It is preferable that the S content is as low as possible. Because excessive addition of S causes remarkable reduction in toughness, the upper limit of the S content is set at 0.002 %.

### Ni: 0.10 % to 0.50 %

Ni is effective in improving the strength and toughness of the base material. 0.10 % or higher of Ni is added. If the Ni content is lower than 0.10 %, the effect cannot be obtained sufficiently. On the other hand, the upper limit of the Ni content is set at 0.50 % because excessive addition of Ni causes increase in production cost. Incidentally, for the same reason, it is preferable that the lower limit of the Ni content is set at 0.20 % and that the upper limit of the Ni content is set at 0.40 %.

### Cr: 0.05 % or lower

Cr improves the strength and toughness of the base material. The upper limit of the Cr content is set at 0.05 % because excessive addition of Cr causes reduction in toughness of the HAZ.

Incidentally, for the same reason, it is preferable that the upper limit of the Cr content is set at 0.03 %. To obtain the effect sufficiently, it is preferable that the lower limit of the Cr content is set at 0.01 %.

### Cu: 0.005 % to 0.030 %

Cu improves the strength of the base material. To obtain the effect sufficiently, it is necessary to add 0.005 % or higher of Cu. On the other hand, the upper limit of the Cu content is set at 0.030 % because excessive addition of Cu causes increase in cracking sensitivity at welding. Incidentally, for the same reason, it is preferable that the lower limit of the Cu content is set at 0.010 % and that the upper limit of the Cu content is set at 0.025 %.

### Mo: 0.05 % to 0.30 %

Mo is an element for improving the strength and toughness of the base material stably after heating for forming solid solution. The lower limit of the Mo content is set at 0.05 % because the effect cannot be obtained if the Mo content is lower than 0.05 %. The upper limit of the Mo content is set at 0.30 % because excessive addition of Mo spoils the toughness of the HAZ. Incidentally, for the same reason, it is preferable that the lower limit of the Mo content is set at 0.08 % and that the upper limit of the Mo content is set at 0.20 %.

### V: 0.015 % to 0.040 %

V is an important element for retaining the strength of steel. The lower limit of the V content is set at 0.015 % because the effect cannot be obtained sufficiently if the V content is lower than 0.015 %. The upper limit of the V content is set at 0.040 % because excessive addition of V exerts bad influence on the toughness value.

### Al: 0.015 % to 0.050 %

Al is an element that is effective as a deoxidizer. Further, AlN prevents the austenite grain size from becoming coarse at the solution treatment. The lower limit of the Al content is set at 0.015 % because the effect cannot be obtained sufficiently if the Al content is lower than 0.015 %. The upper limit of the Al content is set at 0.050 % because the grain size refining effect is reduced and the toughness value is saturated if the Al content is higher than 0.050 % and because AlN is produced excessively to cause surface defects of a steel ingot if the Al content is higher than 0.050 %. Incidentally, for the same reason, it is preferable that the lower limit of the Al content is set at 0.025 % and that the upper limit of the Al content is set at 0.035 %.

### Ti: 0.005 % to 0.020 %

Ti is effective in finely reducing the structure size after the solid solution treatment in the same manner as Nb and in suppressing increase in grain size by bonding to N which will be described later. The lower limit of the Ti content is set at 0.005 % because the effect is low if the added Ti content is lower than 0.005 %. The upper limit of the Ti content is set at 0.020 % because toughness is deteriorated greatly by the notch effect if the added Ti content is higher than 0.020 %. Incidentally, for the same reason, it is preferable that the lower limit of the Ti content is set at 0.010 % and that the upper limit of the Ti content is set at 0.016 %.

### Nb: 0.015 % to 0.040 %

Nb is effective in preventing increase in austenite grain size at the time of heating steel to the solution-treatment temperature and in refining the grain size. Nb carbide, etc. may be dispersed into the base material finely and evenly so as to be effective in increasing the high-temperature strength, etc. The lower limit of the Nb content is set at 0.015 % because the effect cannot be obtained sufficiently if the Nb content is lower than 0.015 %. The upper limit of the Nb content is set at 0.040 % because surface defects occur easily in a steel ingot if the Nb content is higher than 0.040 %. Incidentally, for the same reason, it is preferable that the lower limit of the Nb content is set at 0.025 % and that the upper limit of the Nb content is set at 0.035 %.

### Ca: 0.0010 % to 0.0040 %

Ca is effective in improving resistance to hydrogen induced cracking sensitivity and in improving the impact value because Ca is bonded to S or the like to form a spherically shaped chemical compound such as CaS to thereby form oxide. The lower limit of the Ca content is set at 0.0010 % because the effect cannot be obtained sufficiently if the Ca content is lower than 0.0010 %. The upper limit of the Ca content is set at 0. 0040 % because resistance to hydrogen induced cracking sensitivity is deteriorated or coarse inclusions are produced as well as surface defects occur easily in a steel ingot if the Ca content is higher than 0.0040 %. Incidentally, for the same reason, it is preferable that the lower limit of the Ca content is set at 0.0020 % and that the upper limit of the Ca content is set at 0.0030 %.

### N: 0.0030 % to 0.010 %

N is effective in improving HAZ toughness when precipitated as TiN. The lower limit of the N content is set at 0.0030 % because the effect is reduced if the N content is lower than 0.0030 %. However, if the N content is higher than 0.009 %, solid solution N increases to bring about reduction in HAZ toughness. The upper limit of the N content is set at 0.010 % in consideration of correspondence to the added Ti content and improvement of HAZ toughness by minute precipitation of TiN.

### Ti/N: 1.0 to 3.5

Ti and N are important elements for improvingHAZ toughness by producing TiN as described above. The correlation between the Ti content and the N content is also important to obtain the effect sufficiently. That is, if Ti/N is lower than 1.0, the size of grains become coarse to bring about great reduction in toughness value. If Ti/N is higher than 3.5, the toughness value is reduced for the same reason.

### BRIEF DESCRIPTION OF THE DRAWINGS

Fig. 1 is a graph showing impact transition curves after Inventive Material No. 5 and Comparative Material No. 14 are quenched and tempered at 950°C;
Fig. 2 is a graph showing impact characteristic in the case where the austenitizing temperature in each of Inventive Material No. 5 and Comparative Material No. 14 is changed in a range of from 930°C to 1140°C;
Fig. 3 is a graph showing impact characteristic of the weld HAZ in each of Inventive Material No. 5 and Comparative Material No. 14;
Fig. 4 is a graph showing results of a DWTT for confirming
   the brittle fracture arrest temperature of the base material in each of Inventive Material No. 5 and Comparative Material
   No. 14; and
Fig. 5 is a graph showing the relation between low-temperature toughness and Ti/N which is characteristic of components in the inventive material.

### DETAILED DESCRIPTION OF ILLUSTRATIVE EMBODIMENTS

An embodiment of the invention will be described below.

A clad steel plate base material according to the invention can be prepared in the aforementioned component ranges and produced as ingot steel by an ordinary method or the like. The base material and a cladding material which is selected according to the purpose of use or the like are clad-rolled to produce a clad steel plate. Incidentally, for example, a high alloy such as Alloy825 can be used as the cladding material for the purpose of use in a natural gas pipeline. The thickness of the clad steel plate base material is preferably selected to be not larger than 50 mm. When the thickness of the base material is not smaller than 25 mm, one sheet of base material can be subjected to rolling. When the thickness of the base material is smaller than 25 mm, two sheets of base material in piles can be subjected to rolling.

In the invention, the condition for clad rolling is not particularly limited. Clad rolling may be performed by an ordinary method.

The clad steel plate obtained thus is heated in an austenitizing temperature range of from 900°C to 1150°C to be subjected to a solution treatment, and quenched to be hardened. On this occasion, water cooling or oil cooling (e.g., at a cooling rate of 200°C/min or higher) can be used as a method for cooling (quenching) the clad steel plate. Then, the clad steel plate is heated at 550°C to 650°C to be tempered. For example, the heating time for tempering can be selected to be in a range of from 0.5 to 1.0 hour.

By the series of quenching and tempering processes, the grain size in the clad steel plate base material can be finely reduced to a range of from No.10 to No.12.

The clad steel plate may be used as a plate directly or may be used as a clad steel pipe.

At the time of welding the clad steel plate, each of front and rear surfaces can be welded by one pass. Even in the case where one-pass welding is used, the fine structure of the HAZ can be retained so that good toughness can be ensured.

### [Examples]

Examples according to the invention will be described below in comparison with Comparative Examples.

Each sample having a composition shown in Table 1 was prepared as a 25 kg square steel ingot produced in a vacuum induction melting furnace and rolled into a thickness of 25 mm. In this test, two rolled sample sheets in piles were welded circumferentially to each other and quenched and tempered in a state of 50 mm thickness on the assumption of quenching and tempering (QT) of the clad steel plate. The QT temperature was changed to 930°C, 950°C, 960°C, 980°C, 1050°C and 1140°C. Then, the sample was cooled with water and heated at 580°C for 1.0 hour to be tempered.

Table 2 shows mechanical properties of the samples quenched and tempered (QT) at 950°C. In each inventive material, the grain size was in a range of from 10 to 12, that is, the grain size was reducedhyperfinely, and each of the base material and the HAZ exhibited high toughness. On the contrary, in each comparative material, the grain size was smaller than 10, that is, the grain size was not reduced sufficiently finely, and each of the base material and the HAZ exhibited insufficient toughness.

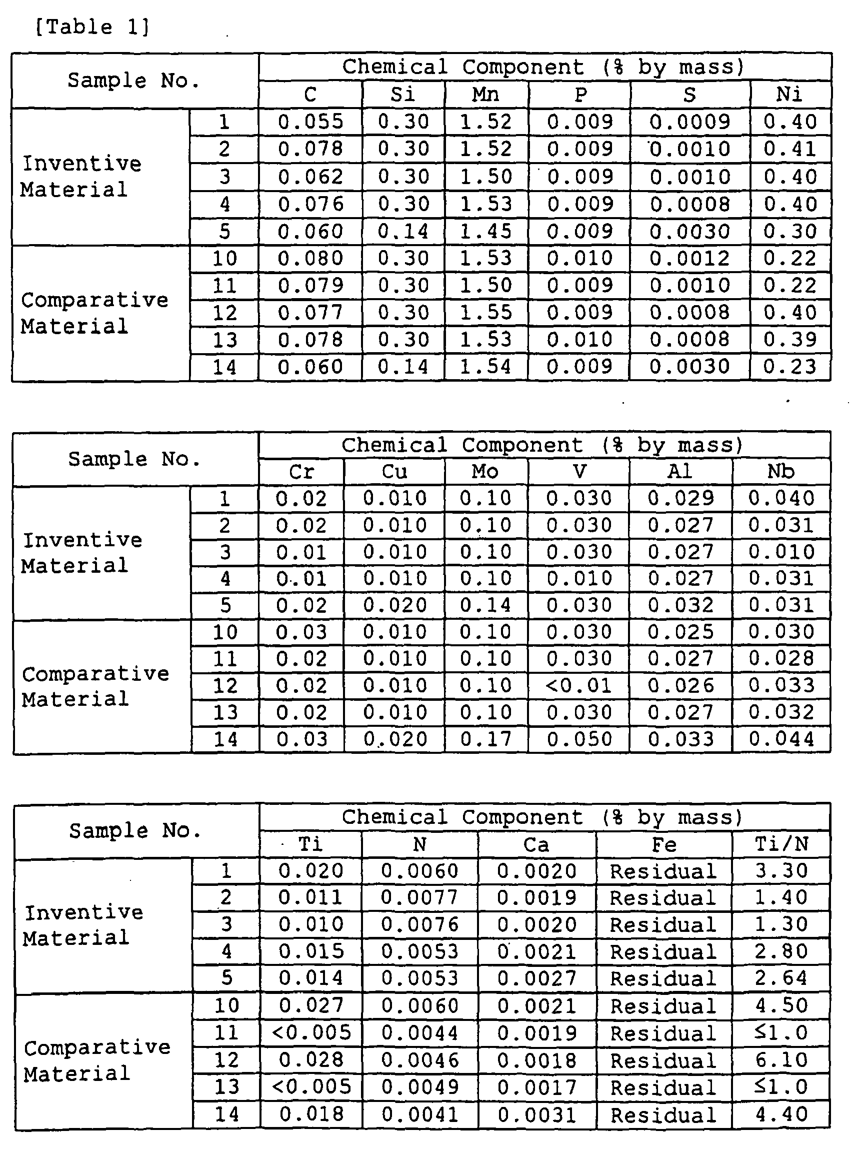

**[Table 2]**

| Sample No. | | Absorbed energy (J) | | Tensile characteristic of base material | | | HAZ Hymax (L=10 Kgf) | Grain size number |
|---|---|---|---|---|---|---|---|---|
| | | Base material | HAZ | | | | | |
| | | -80°C | -40°C | 0.2% Offset Yield Strength (MPa) | Tensile strength (MPa) | Expansion (%) | | |
| Inventive Material | 1 | 187 | 135 | 465 | 486 | 28.6 | 230 | 10.0 |
| | 2 | 198 | 147 | 490 | 592 | 29.6 | 225 | 10.2 |
| | 3 | 139 | 119 | 478 | 575 | 30.5 | 238 | 10.0 |
| | 4 | 235 | 152 | 476 | 583 | 27.2 | 228 | 11.0 |
| | 5 | 410 | 210 | 478 | 570 | 53.9 | 231 | 12.0 |
| Comparative Material | 10 | 4 | 27 | 564 | 655 | 24.8 | 275 | 6.5 |
| | 11 | 92 | 67 | 482 | 571 | 30.3 | 248 | 7.5 |
| | 12 | 9 | 47 | 463 | 560 | 29.5 | 245 | 7.0 |
| | 13 | 62 | 74 | 495 | 597 | 28.6 | 250 | 7.5 |
| | 14 | 112 | 81 | 507 | 597 | 28.2 | 240 | 7.5 |

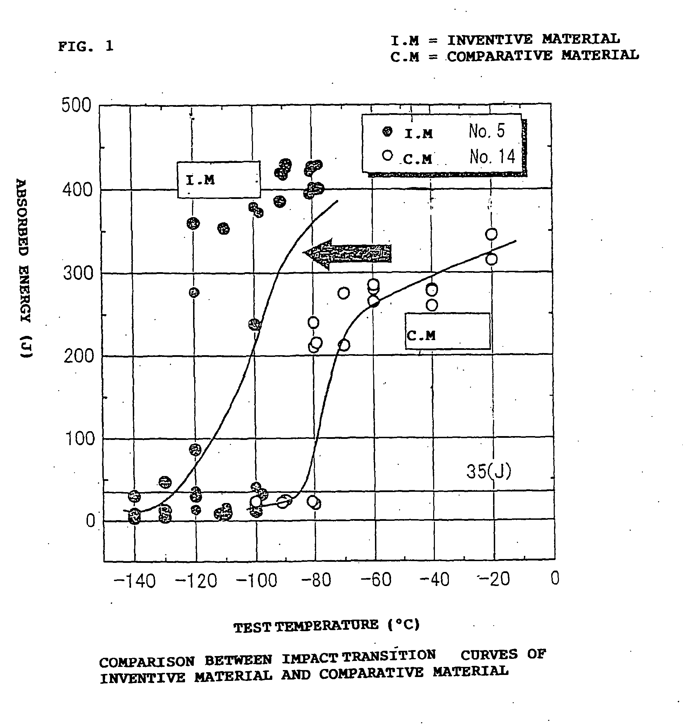

With respect to Inventive Material No. 5 and Comparative Material No.14 (equivalent to the related-art material), absorbed energy was measured while the test temperature was changed. Fig. 1 shows results of the measurement. Inventive Material No. 5 exhibited excellent low-temperature toughness compared with Comparative Material No.14.

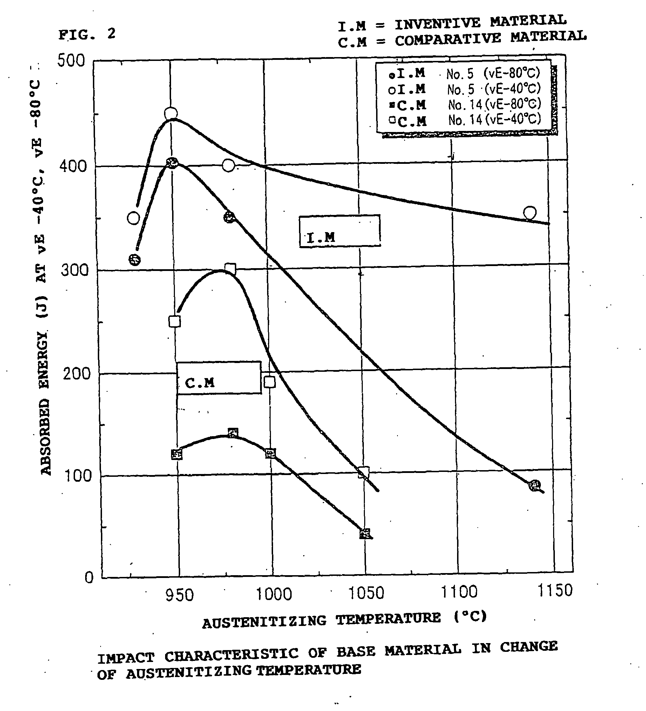

Fig. 2 shows impact characteristic of the base material in each of Inventive Material No. 5 and Comparative Material No. 14 in the case where the austenitizing temperature is changed in a range of from 930°C to 1140°C. Comparative Material No.14 exhibited toughness of from 110 to 120 (J) of Charpy impact energy at - 80°C (vE -80°C) when Comparative Material No.14 was quenched and tempered at a temperature of from 950°C to 980°C, and exhibited toughness of about 100 (J) at Charpy impact energy at - 40°C (vE -40°C) when Comparative Material No.14 was quenched and tempered at a temperature of 1050°C. On the contrary, Inventive Material No. 5 exhibited high toughness of not lower than 400 (J) of Charpy impact energy at - 80°C (vE -80°C) when Inventive Material No. 5 was quenched and tempered at a temperature of from 930°C to 980°C, and exhibited high toughness of (an impact value of) not lower than 300 (J) of Charpy impact energy at - 40°C (vE -40°C) even when Inventive Material No. 5 was quenched and tempered at a temperature of 1140°C. In this manner, in the inventive material, stable high toughness can be obtained even in the temperature range of from 930°C to 1140°C. Accordingly, the austenitizing temperature range can be widened, so that various kinds of claddingmaterials can be combined for production of various kinds of steel.

Each of the inventive material and the comparative material was subj ected to a one-pass welding test using a 1.2mmΦ weld rod in the welding condition of a current of 300 A, a voltage of 33 V to 34 V and a rate of 270 mm/min in a shielding gas (CO₂). Also in this welding, it was confirmed that impact characteristic of the boundary between the base material and the weld portion and the heat-affected zone of the base material after one-pass welding exhibited a far high impact value compared with the related-art material.

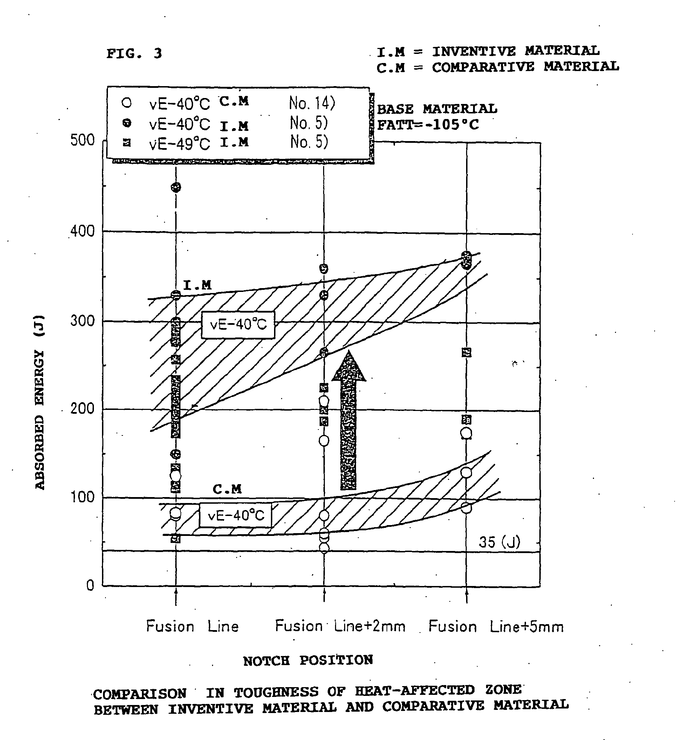

Fig. 3 shows impact characteristic of the boundarybetween the base material and the weld portion and the heat-affected zone of the base material in the case where each of Inventive Material No. 5 and Comparative Material No.14 quenched and tempered at 950°C is subjected to the welding test.

Inventive Material No. 5 exhibited high toughness of not lower than 150 (J) of Charpy impact energy at - 40°C (vE -40°C) in the aforementioned areas. On the contrary, Comparative Material No.14 exhibited toughness of lower than 100 (J) in the neighborhood of the boundary between the base material and the weld portion.

Table 2 shows the Vickers hardness of the weld portion. The maximum hardness of the heat-affected zone in the inventive material was about HV 230, that is, exhibited a low value in terms of hardness after welding compared with the comparative material. This is because the structure in a range of from the Fusion Line portion (the boundary between the base material and the weld portion) to the HAZ is made of bainite and is little hardened.

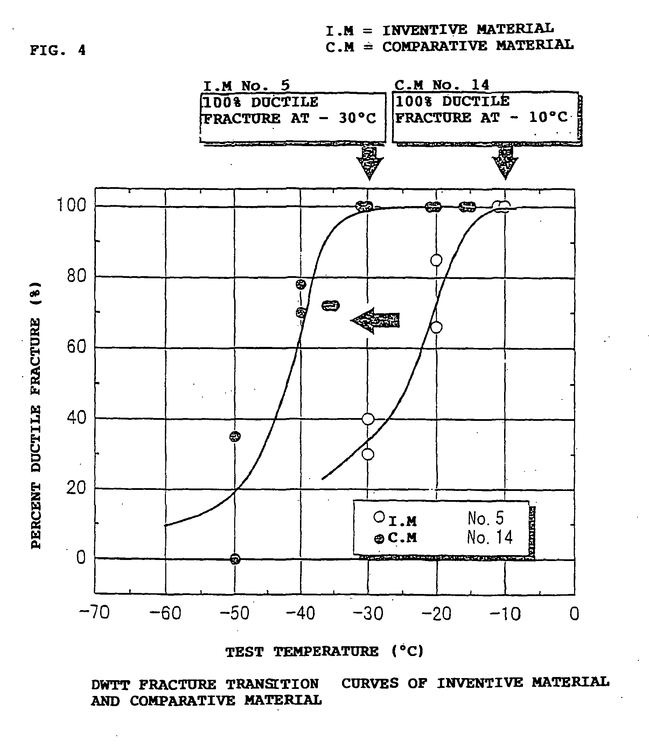

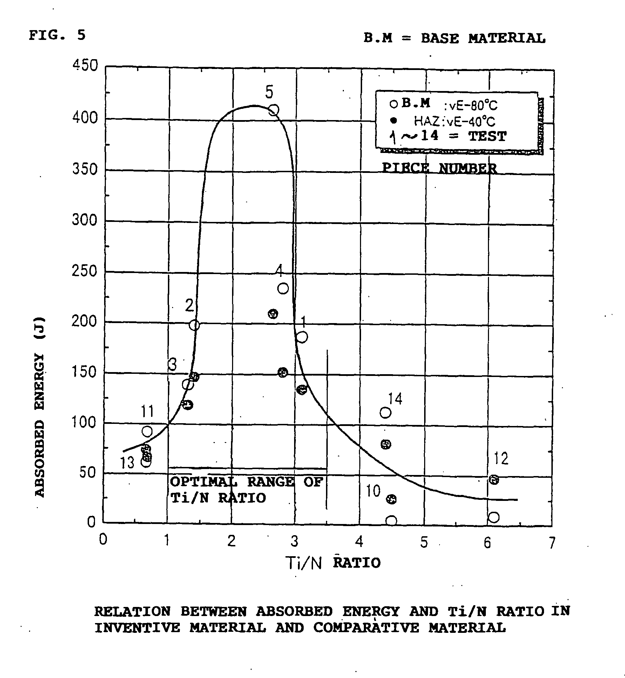

Fig. 4 shows results of the drop weight tear test (DWTT) for confirming the brittle fracture arrest temperature of the base material in each of Inventive Material No. 5 and Comparative Material No.14. The inventive material exhibited 100 % ductile fracture at -30°C and 70 % or higher ductile fracture at -40°C, that is, exhibited excellent low-temperature toughness compared with the comparative material. As shown in Table 2, the mean grain size in the inventive material was No. 10 to No.12, that is, reduced finely compared with the comparative material. This is because balanced addition of proper amounts of alloy elements such as Al, Nb, V, Ti, N, Ni, etc. makes a great contribution to reduction in grain size. Furthermore, this is based on the synergic effect by addition of proper amounts of Ti and N as well as addition of Al, Nb, V, Ti, N, Ni, etc. and based on the balance of added Ti and N in which Ti/N is adjusted to be in a range of from 1.0 to 3.5 to produce stable TiN as shown in Fig. 5. That is, it is obvious that the growth of grains in the heat-affected zone is suppressed by minute precipitation of TiN to thereby improve the toughness value of the HAZ greatly when the ratio Ti/N is selected to be in a range of from 1.0 to 3.5.

As described above, according to the invention, the following advantage can be obtained when the base material for clad steel plate contains 0.05 % by mass to 0.10 % by mass of C, 0.10 % by mass to 0.30 % by mass of Si, 1.30 % by mass to 1.60 % by mass of Mn, 0.015 % by mass or less of P, 0.002 % by mass or less of S, 0.10 % by mass to 0.50 % by mass of Ni, 0.05 % by mass or less of Cr, 0.005 % by mass to 0.030 % by mass of Cu, 0.05 % by mass to 0.30 % by mass of Mo, 0.015 % by mass to 0.040 % by mass of V, 0.015 % by mass to 0.040 % by mass of Nb, 0.005 % by mass to 0.020 % by mass of Ti, 0.015 % by mass to 0.050 % by mass of Al, 0.0010 % by mass to 0.0040 % by mass of Ca, and 0.0030 % by mass to 0.010 % by mass of N, and when the ratio Ti/N is preferably selected to be in range of from 1.0 to 3.5.

That is, as the advantage of the invention, in the boundary between the base material and the weld portion and in the heat-affected zone of the base material after one-pass welding, low-temperature toughness of the weld portion and the base material can be improved greatly compared with a material equivalent to the related-art material APIX65. Furthermore, in the DWTT for confirming the brittle fracture arrest temperature, high percent tough fracture can be obtained even in a low temperature range in which it was impossible to obtain such a high percent tough fracture in the related-art material. Reliability of a clad pipe can be improved greatly, so that the invention is very useful industrially. The clad steel plate can be produced by ordinary quenching and tempering. Because there is no additional heat treatment required, reduction both in production step and in production cost can be attained. In addition, because reduction in hardness of the weld HAZ can be attained, cold cracking sensitivity at welding can be reduced.

## Claims

1. A base material for clad steel plate excellent in low-temperature toughness at base metal and weld heat-affected zone, containing 0.05 % by mass to 0.10 % by mass of C, 0.10 % by mass to 0.30 % by mass of Si, 1.30 % by mass to 1.60 % by mass of Mn, 0.015 % by mass or less of P, 0.002 % by mass or less of S, 0.10 % by mass to 0.50 % by mass of Ni, 0.05 % by mass or less of Cr, 0.005 % by mass to 0.030 % by mass of Cu, 0.05 % by mass to 0.30 % by mass of Mo, 0.015 % by mass to 0.040 % by mass of V, 0. 015 % by mass to 0.040 % by mass of Nb, 0.005 % by mass to 0.020 % by mass of Ti, 0.015 % by mass to 0.050 % by mass of Al, 0.0010 % by mass to 0.0040 % by mass of Ca, 0.0030 % by mass to 0.010 % by mass of N, and the residual part of Fe and unavoidable impurities.

2. A base material for clad steel plate excellent in
low-temperature toughness at base metal and weld heat-affected zone according to Claim 1, wherein Ti/N which is the ratio of the Ti content to the N content is selected to be in a range of from 1.0 to 3.5.

3. A base material for clad steel plate excellent in
low-temperature toughness at a weld heat-affected zone
according to Claim 1 or 2, wherein the number of grain size after quenching and tempering of the clad steel plate is 10 to 12.

4. A method of producing a clad steel plate excellent in low-temperature toughness at a weld heat-affected zone,
comprising the steps of: clad-rolling a clad steel plate base material and a cladding material, said base material containing 0.05 % by mass to 0.10 % by mass of C, 0.10 % by mass to 0.30 % by mass of Si, 1.30 % by mass to 1. 60 % by mass of Mn, 0.015 % by mass or less of P, 0.002 % by mass or less of S, 0.10 % by mass to 0.50 % by mass of Ni, 0.05 % by mass or less of Cr, 0.005 % by mass to 0.030 % by mass of Cu, 0.05 % by mass to 0.30 % by mass of Mo, 0.015 % by mass to 0.040 % by mass of V, 0.015 % by mass to 0.040 % by mass of Nb, 0.005 % by mass to 0.020 % by mass of Ti, 0.015 % by mass to 0.050 % by mass of Al, 0.0010 % by mass to 0.0040 % by mass of Ca, 0.0030 % by mass to 0.010 % by mass of N, and the residual part of Fe and unavoidable impurities; performing a solution treatment by heating the resulting plate, at 900°C to 1150 °C; quenching and tempering the resulting plate at 550°C to 650°C.

5. A method of producing a clad steel plate excellent in low-temperature toughness at a weld heat-affected zone
according to Claim 4, wherein Ti/N which is the ratio of the Ti content to the N content is selected to be in a range of from 1.0 to 3.5.

## Patentansprüche

1. Grundmaterial für eine plattierte Stahlplatte mit hervorragender Tieftemperaturzähigkeit in der von dem Basismetall und der Schweißwärme beeinflussten Zone, das 0,05 Masse-% bis 0,10 Masse-% C, 0,10 Masse-% bis 0,30 Masse-% Si, 1,30 Masse-% bis 1,60 Masse-% Mn, maximal 0,015 Masse-% P, maximal 0,002 Masse-% S, 0,10 Masse-% bis 0,50 Masse-% Ni, maximal 0,05 Masse-% Cr, 0,005 Masse-% bis 0,030 Masse-% Cu, 0,05 Masse-% bis 0,30 Masse-% Mo, 0,015 Masse-% bis 0,040 Masse-% V, 0,015 Masse-% bis 0,040 Masse-% Nb, 0,005 Masse-% bis 0,020 Masse-% Ti, 0,015 Masse-% bis 0,050 Masse-% Al, 0,0010 Masse-% bis 0,0040 Masse-% Ca, 0,0030 Masse-% bis 0,010 Masse-% N enthält, Rest Eisen und unvermeidliche Verunreinigungen.

2. Grundmaterial für eine plattierte Stahlplatte mit hervorragender Tieftemperaturzähigkeit in der von dem Basismetall und der Schweißwärme beeinflussten Zone nach Anspruch 1, wobei Ti/N, nämlich das Verhältnis des Ti-Gehalts zum N-Gehalt, in einem Bereich von 1,0 bis 3,5 gewählt wird.

3. Grundmaterial für eine plattierte Stahlplatte mit hervorragender Tieftemperaturzähigkeit in einer von der Schweißwärme beeinflussten Zone nach Anspruch 1 oder 2, wobei die Zahl der Korngröße nach dem Abschrecken und Anlassen der plattierten Stahlplatte 10 bis 12 beträgt.

4. Verfahren zur Herstellung einer plattierten Stahlplatte mit hervorragender Tieftemperaturzähigkeit in einer von der Schweißwärme beeinflussten Zone, mit den folgenden Schritten: Plattierwalzen eines Grundmaterials für eine plattierte Stahlplatte und eines Plattierungsmaterials, wobei das Grundmaterial 0,05 Masse-% bis 0,10 Masse-% C, 0,10 Masse-% bis 0,30 Masse-% Si, 1,30 Masse-% bis 1,60 Masse-% Mn, maximal 0,015 Masse-% P, maximal 0,002 Masse-% S, 0,10 Masse-% bis 0,50 Masse-% Ni, maximal 0,05 Masse-% Cr, 0,005 Masse-% bis 0,030 Masse-% Cu, 0,05 Masse-% bis 0,30 Masse-% Mo, 0,015 Masse-% bis 0,040 Masse-% V, 0,015 Masse-% bis 0,040 Masse-% Nb, 0,005 Masse-% bis 0,020 Masse-% Ti, 0,015 Masse-% bis 0,050 Masse-% Al, 0,0010 Masse-% bis 0,0040 Masse-% Ca, 0,0030 Masse-% bis 0,010 Masse-% N enthält, Rest Eisen und unvermeidliche Verunreinigungen; Durchführen einer Lösungsbehandlung durch Erhitzen der resultierenden Platte auf 900°C bis 1150°C; Abschrecken und Anlassen der resultierenden Platte bei 550°C bis 650°C.

5. Verfahren zur Herstellung einer plattierten Stahlplatte mit hervorrangender Tieftemperaturzähigkeit in einer von der Schweißwärme beeinflussten Zone nach Anspruch 4, wobei Ti/N, nämlich das Verhältnis des Ti-Gehalts zum N-Gehalt, in einem Bereich von 1,0 bis 3,5 gewählt wird.

## Revendications

1. Matériau de support en tôle d'acier plaquée à excellente ténacité à basse température au niveau du métal de base et de la zone affectée par la chaleur de soudage, contenant de 0,05 % en masse à 0,10 % en masse de C, 0,10 % en masse à 0,30 % en masse de Si, 1,30 % en masse à 1,60 % en masse de Mn, 0,015 % en masse ou moins de P, 0,002 % en masse ou moins de S, 0,10 % en masse à 0,50 % en masse de Ni, 0,05 % en masse ou moins de Cr, 0,005 % en masse à 0,030 % en masse de Cu, 0,05 % en masse à 0,30 % en masse de Mo, 0,015 % en masse à 0,0040 % en masse de V, 0,015 % en masse à 0,040 % en masse de Nb, 0,005 % en masse à 0,020 % en masse de Ti, 0,015 % en masse à 0,050 % en masse d'Al, 0,0010 % en masse à 0,0040 % en masse de Ca, 0,0030 % en masse à 0,010 % en masse de N, le reste étant constitué de Fe et d'inévitables impuretés.

2. Matériau de support en tôle d'acier plaquée à excellente ténacité à basse température au niveau du métal de base et de la zone affectée par la chaleur de soudage selon la revendication 1, dans lequel Ti/N, à savoir le rapport de la teneur en Ti à la teneur en N, est choisi de façon à être de 1,0 à 3,5.

3. Matériau de support en tôle d'acier plaquée à excellente ténacité à basse température au niveau d'une zone affectée par la chaleur de soudage selon la revendication 1 ou 2, dans lequel la valeur de taille des grains après trempe et revenu de la tôle d'acier plaquée est de 10 à 12.

4. Procédé de fabrication de tôle d'acier plaquée à excellente ténacité à basse température au niveau d'une zone affectée par la chaleur de soudage, comportant les étapes de : placage par laminage d'un matériau de support en tôle d'acier plaquée et d'un matériau de placage, ledit matériau de support contenant de 0,05 % en masse à 0,10 % en masse de C, 0,10 % en masse à 0,30 % en masse de Si, 1,30 % en masse à 1,60 % en masse de Mn, 0,015 % en masse ou moins de P, 0,002 % en masse ou moins de S, 0,10 % en masse à 0,50 % en masse de Ni, 0,05 % en masse ou moins de Cr, 0,005 % en masse à 0,030 % en masse de Cu, 0,05 % en masse à 0,30 % en masse de Mo, 0,015 % en masse à 0,040 % en masse de V, 0,015 % en masse à 0,040 % en masse de Nb, 0,005 % en masse à 0,020 % en masse de Ti, 0,015 % en masse à 0,050 % en masse d'Al, 0,0010 % en masse à 0,0040 % en masse de Ca, 0,0030 % en masse à 0,010 % en masse de N, le reste étant constitué de Fe et d'inévitables impuretés ; exécution d'un traitement de mise en solution en chauffant à une température de 900°C à 1150°C la tôle obtenue ; et trempe et revenu à une température de 550°C à 650°C de la tôle obtenue.

5. Procédé de fabrication de tôle d'acier plaquée à excellente ténacité à basse température au niveau d'une zone affectée par la chaleur de soudage selon la revendication 4, dans lequel Ti/N, à savoir le rapport de la teneur en Ti à la teneur en N, est choisi de façon à être de 1,0 à 3,5.
